# EUROPEAN PATENT APPLICATION

(11) **EP 2 611 182 A2**
(43) Date of publication of application: **03.07.2013**
(21) Application number: 12197809.2
(22) Date of filing: 18.12.2012
(51) Int. Cl.: H04N 13/04

(54) **Image processing method and apparatus using multi-layer representation**

(30) Priority: 26.12.2011 KR 20110142431
(71) Applicant: Samsung Electronics Co., Ltd, Gyeonggi-do 443-742 (KR)
(72) Inventor: Baik, Aron, 446-712 Gyeonggi-do (KR)
(74) Representative: Grootscholten, Johannes A.M.

(57) **Abstract**

A method and apparatus for processing an image using a multi-layer representation is provided. A multi-layer representation for a reference view including information about a scene may be generated based on at least one input view. The multi-layer representation may be expanded to obtain information about a portion occluded by the at least one common input view. Output views viewed at different viewpoints may be generated using the expanded multi-layer representation.

## Description

### BACKGROUND

### 1. Field

One or more example embodiments relate to a method and apparatus for processing an image, and more particularly, to an image processing method and apparatus that may render a view using a multi-layer representation.

### 2. Description of the Related Art

A three-dimensional (3D) imaging apparatus needs to provide a user with an image viewed at a viewpoint, apart from viewpoints of input views. Accordingly, the 3D imaging apparatus may generate an output view viewed at a viewpoint different from the viewpoints of the input views based on the input views.

Generally, a limited number of input views are provided to an image processing apparatus due to network bandwidth limitations, image-capture expenses, or the like. In order to provide a viewer with images viewed at multiple viewpoints, output views viewed at viewpoints different from the viewpoints of the input views may be generated through a view interpolation or a view extrapolation or both using the input views.

View interpolation refers to generating an output view viewed at a viewpoint between the viewpoints of the input views. View extrapolation refers to generating an output view viewed at a viewpoint outside of the viewpoints of the input views.

### SUMMARY

The foregoing and/or other aspects are achieved by providing a method of processing an image, the method including generating a multi-layer representation for a reference view including information about a scene, using at least one input view, and generating an output view viewed at an output viewpoint, using the generated multi-layer representation. Here, each of the at least one input view may correspond to a view viewed at a predetermined viewpoint of the scene. Each of the at least one input view may include an image, and a depth map associated with the image. The multi-layer representation may include at least one layer generated based on the image and the depth map of each of the at least one input view.

The image processing method may further include expanding the at least one layer of the multi-layer representation.

Each of the at least one layer may be expanded within a range in which a layer, among the at least one layer, having a depth value greater than a depth value of each of the at least one layer is un-occluded.

Whether the at least one layer is to be expanded may be determined iteratively, on a pixel by pixel basis, starting from a pixel positioned at an end of a layer.

A layer, among the at least one layer, having a greatest depth value with respect to a predetermined horizontal line of the reference view, may have color information of all areas on the predetermined horizontal line.

The generating of the multi-layer representation may include generating the at least one layer by projecting an image of each of the at least one input view onto the reference view, and consolidating interacting layers, among the generated at least one layer.

The generating of the at least one layer may include selecting a first location for a first input view, among the at least one input view, calculating a second location and a depth in the reference view, by projecting the selected first location onto the reference view, and adding a new layer to the second location and the depth.

A color value of the added layer may be identical to a color value of the first location.

A difference between depth values of the interacting layers may be less than or equal to a predetermined threshold value.

The consolidating may include selecting a first location in the reference view, and consolidating, into a single layer, information about the first location included in the interacting layers at the first location.

The generating of the output view may include calculating a location in the output view of each of the at least one layer, by projecting each of the at least one layer onto the output view, and determining a color of a layer having a smallest depth value, among the at least one layer, to be a color of the calculated location for each location in the output view.

When a first pixel and a second pixel that are adjacent to each other in the multi-layer representation are included in a first layer and a second layer, respectively, the first pixel is projected onto a first location of the output view, and the second pixel is projected onto a second location of the output view, a color of a pixel positioned between the first location and the second location may be determined based on an interpolation between a color of the first pixel and a color of the second pixel.

The foregoing and/or other aspects are achieved by providing an apparatus for processing an image, the apparatus including a multi-layer representation generating unit to generate a multi-layer representation for a reference view including information about a scene, using at least one input view, and an output view generating unit to generate an output view viewed at an output viewpoint, using the generated multi-layer representation. Here, each of the at least one input view may correspond to a view viewed at a predetermined viewpoint of the scene. Each of the at least one input view may include an image, and a depth map associated with the image. The multi-layer representation may include at least one layer generated based on the image and the depth map of each of the at least one input view.

The image processing apparatus may include a layer expanding unit to expand the at least one layer of the multi-layer representation.

The multi-layer representation generating unit may generate the at least one layer by projecting an image of each of the at least one input view onto the reference view, and may consolidate interacting layers, among the generated at least one layer.

The multi-layer representation generating unit may generate the at least on layer by selecting a first location for a first input view, among the at least one input view, calculating a second location and a depth in the reference view by projecting the selected first location onto the reference view, and adding a new layer to the second location and the depth.

The multi-layer representation generating unit may consolidate the interacting layers, by selecting a first location in the reference view, and consolidating, into a single layer, information about the first location included in the interacting layers at the first location.

The output view generating unit may generate the output view, by calculating a location in the output view of each of the at least one layer by projecting each of the at least one layer onto the output view, and by determining a color of a layer having a smallest depth value, among the at least one layer, to be a color of the calculated location for each location in the output view.

The foregoing and/or other aspects are achieved by providing a method of processing an image, the method including receiving an input of a plurality of views including an image, and color information and depth values of the image, and generating a reference view using the plurality of views. Here, at least one location of the generated reference view may have a plurality of different depth values, and color information corresponding to the plurality of different depth values.

The image processing method may further include generating, based on the generated reference view, an output view to be displayed.

The plurality of different depth values may be generated by consolidating, into a single depth value, interacting depth values at the at least one location of the reference view.

A difference between the interacting depth values may be less than or equal to a predetermined threshold value.

The foregoing and/or other aspects are achieved by providing an image processing method. The image processing method includes generating a multi-layer representation for a single reference view comprising scene information present in a plurality of input images, wherein the scene information comprises pixel information at a plurality of pixel locations and layer information corresponding to the pixel information, the layer information comprising depth information corresponding to the pixel information, eliminating interaction between layers at a same pixel location based on a predetermined rule, creating layer information in an occluded region by propagating neighboring layer information to an adjacent location if the propagated neighbor layer information does not occlude any existing layer information at the adjacent location, and generating an output view image by rendering data from the multi-layer representation.

The foregoing and/or other aspects are achieved by providing an image processing apparatus. The image processing apparatus includes a multi-layer representation generating unit to generate a multi-layer representation for a single reference view comprising scene information present in a plurality of input images and to eliminate interaction between layers at a same pixel location based on a predetermined rule, wherein the scene information comprises pixel information at a plurality of pixel locations and layer information corresponding to the pixel information, the layer information comprising depth information corresponding to the pixel information, a layer expanding unit to create layer information in an occluded region by propagating neighboring layer information to an adjacent location if the propagated neighbor layer information does not occlude any existing layer information at the adjacent location, and an output view generating unit to generate an output view image by rendering data from the multi-layer representation.

The foregoing and/or other aspects are achieved by providing a method of generating a multi-view image. The method includes generating a multi-layer representation by projecting an image of each of at a plurality of input images onto a single reference view comprising scene information present in the plurality of input images, wherein the scene information comprises pixel information at a plurality of pixel locations and layer information corresponding to the pixel information, the layer information comprising depth information corresponding to the pixel information and eliminating interaction between layers of the multi-layer representation at a same pixel location based on a predetermined rule.

The foregoing and/or other aspects are achieved by providing a multi-view display device including an image processing apparatus. The image processing apparatus of the multi-view display device includes a multi-layer representation generating unit to generate a multi-layer representation for a single reference view comprising scene information present in a plurality of input images and to eliminate interaction between layers at a same pixel location based on a predetermined rule, wherein the scene information comprises pixel information associated with a plurality of pixel locations and layer information corresponding to the pixel information, the layer information comprising depth information corresponding to the pixel information, and a layer expanding unit to create layer information in an occluded region by propagating neighboring layer information to an adjacent location if the propagated neighbor layer information does not occlude any existing layer information at the adjacent location, and an output view generating unit to generate an output view image for display by the multi-view display device by rendering data from the multi-layer representation.

Additional aspects of embodiments will be set forth in part in the description which follows and, in part, will be apparent from the description, or may be learned by practice of the disclosure.

### BRIEF DESCRIPTION OF THE DRAWINGS

These and/or other aspects will become apparent and more readily appreciated from the following description of embodiments, taken in conjunction with the accompanying drawings of which:
FIG. 1 illustrates an image processing method according to example embodiments;
FIGS. 2A and 2B illustrate at least one input view according to example embodiments;
FIG. 3 illustrates a multi-layer representation in a context of scene geometry according to example embodiments;
FIG. 4 illustrates generation of an output view using a multi-layer representation according to example embodiments;
FIG. 5 illustrates expansion of a multi-layer representation according to example embodiments;
FIG. 6 illustrates a method of expanding a multi-layer representation according to example embodiments;
FIGS. 7A through 7D illustrate a principle of layer expansion according to example embodiments;
FIG. 8 illustrates layer information of a multi-layer representation according to example embodiments;
FIG. 9 illustrates consolidation of interacting layers according to example embodiments;
FIG. 10 illustrates a method of generating a multi-layer representation according to example embodiments;
FIG. 11 illustrates a method of generating an output view according to example embodiments;
FIG. 12 illustrates a method of projecting layers having similar depth values onto an output view according to example embodiments;
FIG. 13 illustrates an image processing apparatus according to example embodiments;
FIG. 14 illustrates a multi-view display device including an image processing apparatus according to example embodiments; and
FIG. 15A through 15E illustrate an example of multiple view representation.

### DETAILED DESCRIPTION

Reference will now be made in detail to embodiments, examples of which are illustrated in the accompanying drawings, wherein like reference numerals refer to the like elements throughout. Embodiments are described below to explain the present disclosure by referring to the figures.

The following example embodiments may be applied to an apparatus for providing three-dimensional (3D) images or a multi-view display device, for example, a 3D television, a 3D monitor, a tablet computer, a portable gaming device, a laptop computer and the like. The apparatus may display 3D images by a stereoscopic method or an auto-stereoscopic method. The apparatus may be used for 1) stereo-to-multiview conversion, 2) multiview-to-multiview conversion, for example, 3-view to 16-view conversion, 3) stereo depth adjustment, 4) two-dimensional (2D)-to-3D conversion, and the like.

Here, the stereo depth adjustment may be performed by re-rendering stereo images on a widened or shortened baseline to enhance or reduce depth perception of a viewer. The 2D-to-3D conversion may be performed by generating at least two views from a single view without a depth map.

In addition, the following example embodiments may be applied to similar applications that are performed in other devices using 3D capturing and/or display, and may also be applied to software tools for 3D contents.

Herein, input images and input depth maps corresponding to the input images may be rectified. Here, an example of such "rectification" may correspond to a case where all correspondences between input images may be found on an identical scan line. For example, when two pixels in two images correspond to each other, the two pixels may have identical y-coordinate values.

The terms "depth" and "disparity" may be related to each other inversely, for example, through a constant term. Accordingly, the terms "depth" and "disparity," the terms "depth value" and "disparity value," and the terms "depth map" and "disparity map" may be used interchangeably.

The following example embodiments may be described based on a case in which an output view to which horizontal view interpolation and extrapolation are applicable may have a horizontal parallax. However, the above described technical features may also be applied to a case in which the output view may have a vertical parallax. That is, the technical features may be applied to vertical view interpolation and extrapolation as well. Also, the technical features may be valid in a case in which a single view, that is, a single image and a single depth map, is input, as opposed to a plurality of input views.

In image processing, an output view may be generated using at least one input view. The output view may refer to a view viewed at a predetermined output viewpoint. At least one output view may be provided. The at least one input view may have different viewpoints. For example, each of the at least one input view may correspond to a view viewed at a predetermined viewpoint of a single scene, and may be generated by photographing the scene from different viewpoints.

Each of the at least one input view may include an image, and a depth map or a disparity map associated with the image thereby providing a multiple view representation. The image may include at least one pixel indicating a location in the image. The depth map or the disparity map may include a depth of each of the at least one pixel.

A pixel having a relatively great depth value or a pixel having a relatively small disparity value may indicate an object or a background that may be relatively far away from a viewing location such as from a camera. A pixel having a relatively small depth value or a pixel having a relatively great disparity value may indicate an object or a background that may be relatively close to the viewing location such as the camera.

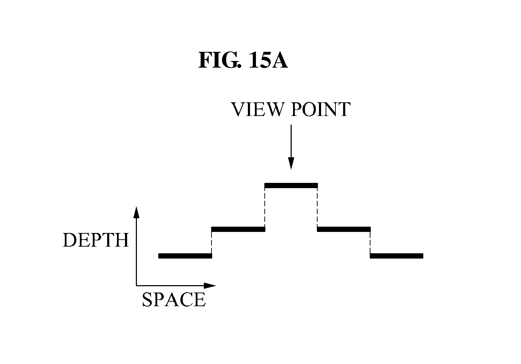

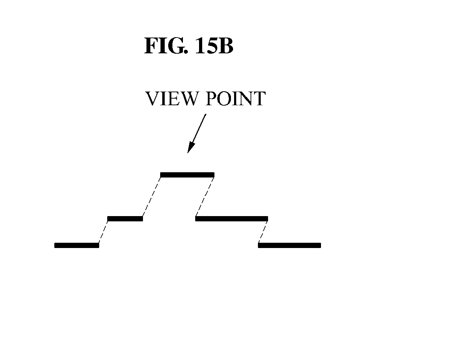

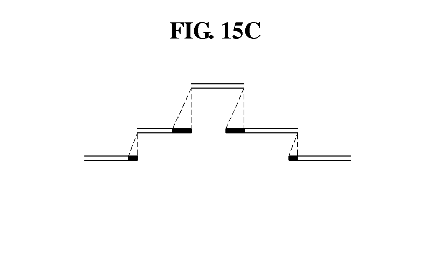

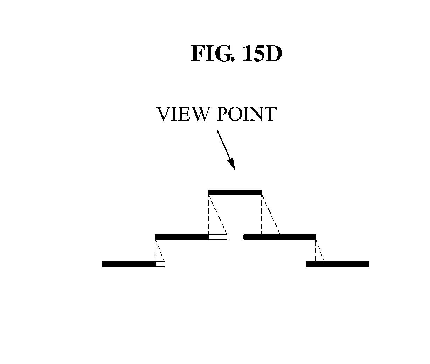

FIG. 15A through 15E illustrate an example of the concept of multiple view representation. The thick horizontal lines in Fig. 15A through 15E represent color (texture) information that is visible from a given view point. Fig. 15A and 15B represent two views of the same scene observed from different view points. Fig. 15C shows combined information from both views. The double lines indicate duplicate or redundant color information. It is apparent that multiple view representation is inefficient since the same information may be present across multiple reference images. Furthermore, the contained information may differ from each other, thereby increasing ambiguity. Since there is no unified representation, this ambiguity must be resolved for each generated view independently. Fig. 15D shows regions, occupied by double lines, that must be filled for new view generation. Again, this hole filling routine is carried out separately for each new view. Although not shown in the figure, if each new view is generated directly from these disparity maps, it is unclear how disparity inconsistencies between different views should be resolved.

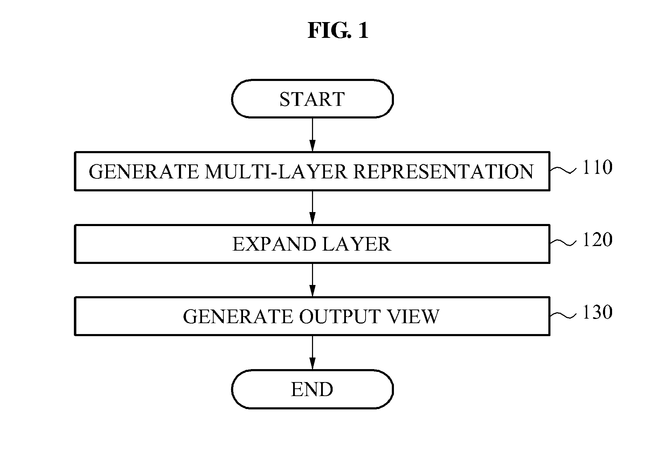

FIG. 1 illustrates an image processing method according to example embodiments. In operation 110 of FIG. 1, a multi-layer representation may be generated using at least one input view. The multi-layer representation may refer to a representation for a reference view including information about a scene. A plurality of reference views or a single reference view may be provided. The multi-layer representation may correspond to a collection of input images and all information about depth maps corresponding to the input images.

A layer may correspond to a location or an area having corresponding depth values such as an identical predetermined depth value or a depth value within a predetermined range. The location or the area may include a single pixel or a plurality of pixels. In particular, at least one pixel that may have an identical predetermined depth value or a depth value within a predetermined range may be regarded as an identical layer. For example, pixels having identical depth values may be adjacent to each other, or may be non-adjacent, that is separated from each other such as by other pixels. In this instance, all the pixels may be regarded as an identical layer, or only pixels adjacent to each other may be regarded as an identical layer.

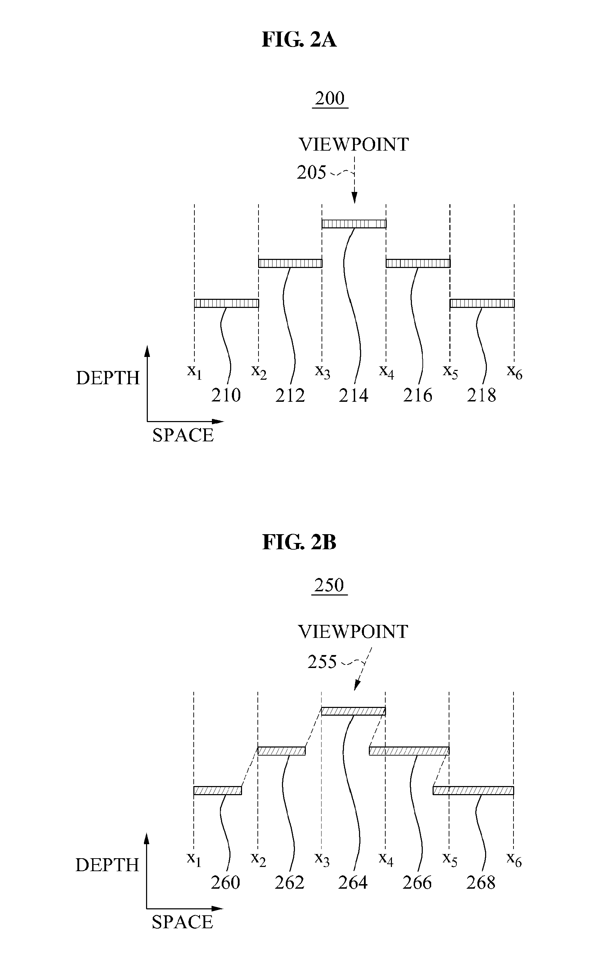

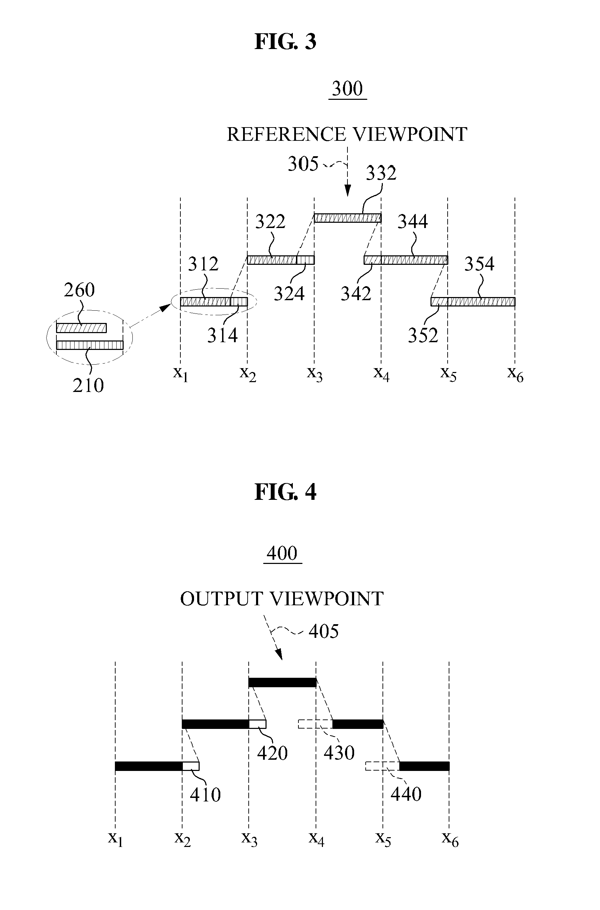

A reference view generated based on a plurality of input views may have a plurality of depth values associated with a predetermined location or coordinates. The plurality of depth values may also be generated from a single input view. A pixel indicating the predetermined location or coordinates in the reference view may have a plurality of different depth values or layers, depending on the view. Thus, the multi-view representation may have a plurality of layers such as one, two, three, or more layers for each pixel. Also, the multi-layer representation may have different numbers of layers corresponding to or associated with each pixel. Each of at least one layer may have a depth value. Accordingly, the at least one pixel may correspond to predetermined coordinates of an image of the reference view, and may be included in different layers. A method of generating the multi-layer representation will be described later in greater detail with reference to FIGS. 2 and 3.

In operation 120 of FIG. 1, at least one layer of the multi-layer representation may be expanded. In an embodiment, expanding may correspond to layer propagation or some other type of duplication. Layer propagation, as an example, may refer to the prolonging of end points of the layer to their respective adjacent positions. The layer propagation may be performed repeatedly as long as a particular condition has been satisfied. As a result of layer propagation, the layer may be expanded. Layer propagation is one of a plurality of methods for expanding a layer. By expanding the at least one layer, an occluded area that is common to all of the at least one input view may be removed. A method of expanding the at least one layer will be described later in greater detail with reference to FIGS. 4 through 6.

In operation 130 of FIG. 1, an output view may be generated using the multi-layer representation. The output view may refer to a view viewed at an output viewpoint. The output viewpoint may be different from input viewpoints of the at least one input view, or may be identical to one of the at least one viewpoint of the at least one input.

FIGS. 2A and 2B illustrate the at least one input view according to example embodiments. Two input views, for example, a first input view 200 of FIG. 2A and a second input view 250 of FIG. 2B may be generated by observing a single scene from different viewpoints. In FIGS. 2A and 2B, a vertical axis may indicate a depth, and a horizontal axis may indicate a space. While moving down the vertical axis a depth value may increase, that is, a distance from the camera may increase. x₁ through x₆ may indicate horizontal coordinates. A direction of an arrow 205 of the first input view 200 or a direction of an arrow 255 of the second input view 250 may indicate a viewpoint. The viewpoint of the first input view 200 corresponds to a vertical direction. The viewpoint of the second input view 250 corresponds to a diagonal direction, for example, a view that is offset from the viewpoint of the first input view in the horizontal direction. Each of the first input view 200 and the second input view 250 may indicate information about a predetermined horizontal line, that is, a single scan line, in each input view.

In the first input view 200 and the second input view 250, lines 210, 212, 214, 216, 218, 260, 262, 264, 266 and 268 may indicate color information or texture information that may be visible from a provided viewpoint. As shown in FIGS. 2A and 2B, a third line 214 of the first input view 200 and a third line 264 of the second input view 250 may be identical in length. Due to a difference in directions between the viewpoints, that is an offset between the viewpoints, a first line 210 of the first input view 200 may be longer than a first line 260 of the second input view 250, and a second line 212 of the first input view 200 may be longer than a second line 262 of the second input view 250. Conversely, a fourth line 216 of the first input view 200 may be shorter than a fourth line 266 of the second input view 250, and a fifth line 218 of the first input view 200 may be shorter than a fifth line 268 of the second input view 250.

When an output view is generated directly using multiple input views, for example, the first input view 200 and the second input view 250, identical information may be present across at least one input view. That is, there is redundant information present in the multiple input views as also described with respect to FIG. 15A through 15E. In this instance, the multiple input views may be insufficient to completely generate the entire output view.

Also, information included in the multiple input views may differ from each other, thereby increasing ambiguity. The ambiguity may be resolved for each output view independently. However, a new representation for representing a reference view may be used to resolve any inconsistency.

FIG. 3 illustrates a multi-layer representation in a context of scene geometry according to example embodiments. In FIG. 3, a reference view 300 may be generated using the first input view 200 of FIG. 2A and the second input view 250 of FIG. 2B. The reference view 300 may be represented as a multi-layer view in which pixels corresponding to predetermined coordinates in the reference view 300 may have different depth values.

A horizontal line in the reference view 300 may indicate a layer that may mark predetermined points in the reference view 300. A portion marked with vertical lines in the reference view 300, that is, a layer, may indicate an area having color information. For example, pixels, corresponding to a portion where two lines 332 and 342, or 344 and 352 may overlap each other, may be represented by a multi-layer. The multi-layer may be represented as a single reference view where all information about a scene is included in an image-based format, as shown in FIG. 3, or may be represented to be divided into a plurality of reference views based on a pixel location.

An α-value may also be assigned to each layer such as an α-value indicating a relative transparency or opacity. One possible approach for obtaining the α-value may be to compute an alpha matte for each input image, using a depth map correspond to the each input image to find boundary regions, and to use the computed alpha matte like any other predetermined layer attributes while constructing a multi-layer representation.

The reference view 300 may correspond to a view viewed at a reference viewpoint 305 of the scene. The reference viewpoint 305 may be selected to be close to the center of viewpoints of all input views, for example, the first input view 200 and the second input view 250. For example, when three cameras are collinearly arranged, the center of the three cameras may be used as the reference viewpoint.

Portions 314 and 324 marked with vertical lines may indicate portions generated based on color information of the first input view 200, that is, portions of layers. Portions 342 and 352 marked with diagonal lines may indicate portions generated based on color information of the second input view 250. The other portions 312, 322, 332, 344, and 354 marked with overlapping vertical and diagonal lines may indicate portions in which the color information in the first input view 200 and the color information in the second input view 250 are duplicated or redundant. For example, a first layer including the portions 312 and 314 may be generated based on color information of the first line 210 in the first input view 200 and color information of the first line 260 in the second input view 250.

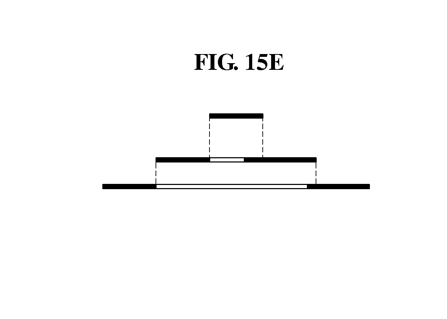

Similarly, referring again to FIG. 15A throught 15E, a multi-layer representation in the context of scene geometry is illustrated at FIG. 15E. If color information is available at all points marked by the thick horizontal line, then complete scene information that may be used to generate arbitrary viewpoints is available. Just as in the case of multiple view representation, some color values may need to be resolved in this consolidation process since they may come from multiple input views. However, note that this consolidation process typically need take place only once and the same color values may be referenced during subsequent view generation process. Also, in FIG. 15E, the double lines represent hole filled regions, and similarly, the filling of these hole regions need occur only once, thereby ensuring greater visual consistency across multiple generated views.

A multi-layer representation may include layers including colors, depths, and optionally α-values. The layers may be visible from input images.

FIG. 4 illustrates generation of an output view 400 using a multi-layer representation according to example embodiments. The output view 400 may be generated using the multi-layer representation of the reference view 300 of FIG. 3. The output view 400 may correspond to a view viewed at an output viewpoint 405 of a scene indicated by the multi-layer representation. The output view 400 may be generated by warping the reference view 300 to the output viewpoint 405, using the multi-layer representation. That is, a location in the output view 400 of each of at least one layer may be calculated by projecting each of the at least one layer in the multi-layer representation onto the output view 400. Also, a color of a layer closest to each location in the output view 400, that is, a color of a layer having a smallest depth value among the at least one layer, may be determined to be a color of the calculated location.

Portions 430 and 440, which are unshaded and are composed of dotted-lines may indicate layers that may not be in use in the output view 400. Solid-lined, unshaded portions 410 and 420 may indicate layers for which color information is used to generate the output view 400. That is, the solid-lined, unshaded portions 410 and 420 may indicate areas to be filled to generate the output view 400. The solid-lined, unshaded portions 410 and 420 may correspond to occluded areas common to the first input view 200 of FIG. 2A and the second input view 250 of FIG. 2B. That is, information included in layers occluded by input images may fail to describe scene information completely.

A portion of areas may become visible from new viewpoints that are different from viewpoints of the input views as illustrated in FIG. 4. Layers corresponding to the areas may correspond to holes that may be absent in a multi-layer representation generated based on the input views. For example, areas corresponding to the solid-lined, unshaded portions 410 and 420 in the output view 400 may correspond to holes. The holes in the output view 400 may be removed using a predetermined hole filling algorithm.

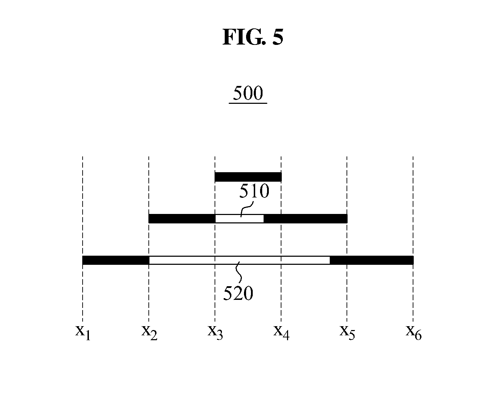

FIG. 5 illustrates expansion of a multi-layer representation according to example embodiments. The multi-layer representation of the reference view of FIG. 3 may be expanded. For example, each of at least one layer in the multi-layer representation may be expanded within a range in which a layer having a depth value greater than a depth value of each of the at least one layer is un-occluded, among the at least one layer. In other words, a layer may be propagated to an adjacent layer if the propogated layer does not occlude any existing layers at the new location.

An expanded reference view 500 may be generated by expanding layers. For example, the expanded reference view 500 may be generated by expanding a layer to an occluded area common to the first input view 200 of FIG. 2A and the second input view 250 of FIG. 2B. When the layer is expanded to the occluded area common to the first input view 200 and the second input view 250, color information for the common occluded area may be generated.

A first expanded area 510 or a second expanded area 520 may correspond to the common occluded area, or a portion of the area. That is, the first expanded area 510 and the second expanded area 520 may indicate areas or a portion of the areas in which hole filling may be performed.

The first expanded area 510 may correspond to an area in which layers having intermediate depths, that is, layers located between layers of lesser and greater depth, may be expanded. The second expanded area 520 may correspond to an area in which layers having greatest depth values, that is, layers represented at a lowermost end, may be expanded. When color information for all points marked by the first expanded area 510 and the second expanded area 520 is provided, complete scene information that may be used to generate a predetermined output view may be obtained. Accordingly, an output view generated using a multi-layer representation of the expanded reference view 500 may not include holes, and a hole filling routine need not be performed separately on each new output view, thereby increasing efficiency.

Filling of areas including holes may be performed only once, through expansion of the layers. The filling may guarantee visual consistency across multiple output views generated at different viewpoints. New output views may be generated based on a single common reference view, for example, the expanded reference view 500. Accordingly, inconsistency between output views may be reduced, when compared to a case in which output views are generated based on different input views, respectively.

A layer or a portion of the layer generated through expansion may correspond to a complete layer description that may fully specify, for example, a color, a depth, and optionally an α-value, or may correspond to a partial layer description that may only specify a depth with the rest unspecified. In the case of the partial layer description, a task of assigning other attributes of generated layers may be postponed to a later operation performed after the expansion. For example, improved results may be obtained when all layers are expanded based on only a depth specification, and colors of layers are filled later based on information of all existing layers.

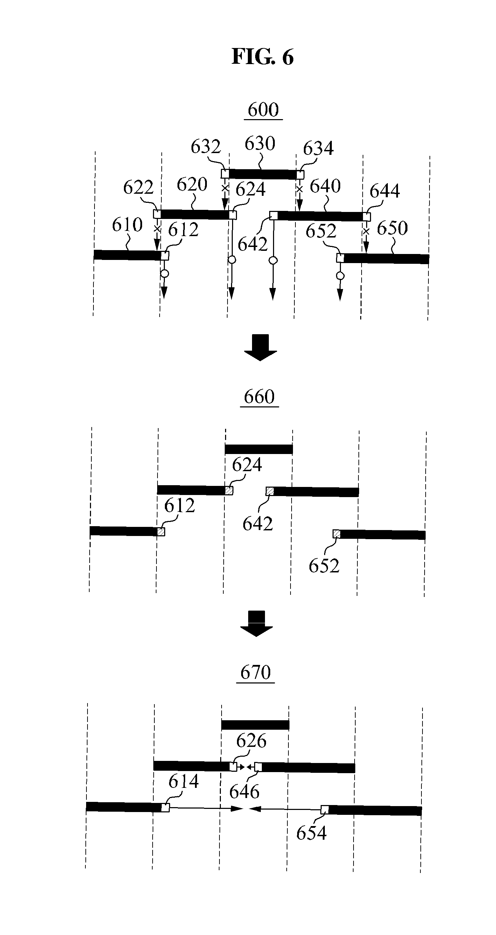

FIG. 6 illustrates a method of expanding a multi-layer representation according to example embodiments.

Referring to FIG. 6, five layers, a first layer 610, a second layer 620, a third layer 630, a fourth layer 640, and a fifth layer 650 may be present in a first multi-layer representation 600. Whether each of the first layer 610, the second layer 620, the third layer 630, the fourth layer 640, and the fifth layer 650 is to be expanded may be determined, on a pixel by pixel basis, starting from a pixel positioned at an end of each layer. A pixel having a greatest depth value at a location of the pixel may be expanded. That is, when a layer is absent under a pixel, the pixel may be expanded. For example, a layer may be absent under a pixel 612 that is affixed to a right end of the first layer 610 as illustrated by the downward pointing arrow below pixel 612 in representation 600 of FIG. 6. That is, a layer having a greater value may be absent at a location of pixel 612. Accordingly, pixel 612 may be expanded. The first layer 610 may be present under a pixel 622 that is affixed to a left end of the second layer 620. That is, the first layer 610 having a greater value may be present at a location of the pixel 622. Accordingly, the pixel 622 may not be expanded, thereby ensuring that no newly expanded pixel occludes existing first layer 610.

The first layer 610, the second layer 620, the fourth layer 640, and the fifth layer 650 may be expanded to pixels 612, 624, 642, and 652, among pixels positioned at a right end or a left end of each of the first layer 610, the second layer 620, the third layer 630, the fourth layer 640, and the fifth layer 650. Pixels 622, 632, 634, and 644 may not be expanded. That is, the first layer 610 and the second layer 620 may be expanded by a pixel to the right side, and the fourth layer 643 and the fifth layer 650 may be expanded by a pixel to the left side. The third layer 630 may not be expanded to any side.

A result of the expanding may be shown in a second multi-layer representation 660. That is, an underlying principle of the expanding may correspond to layer propagation, duplication, or other different propagation schemes. When an existing layer is present at an adjacent location to which a layer is to be expanded, and the existing layer is unoccluded by a portion to be expanded, the layer may be propagated to the adjacent location. Conversely, a layer is not propagated to an adjacent location if the new layer will occlude any existing layer at the new location. An occlusion state may be determined by comparing depth values of the existing layer and the layer to be expanded.

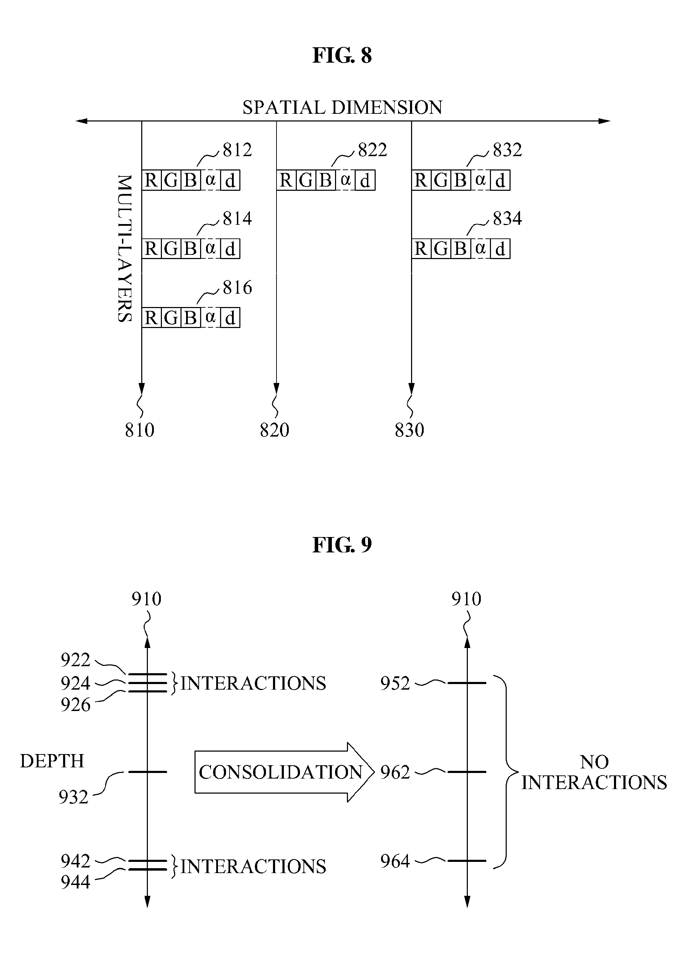

When multiple propagations occur simultaneously, for example, when propagation from a left side and propagation from a right side without any preference to either being applied to a single location simultaneously, interactions between layers may be resolved. The interaction between the layers will be described in detail with reference to FIG. 9.

A third multi-layer representation 670 may describe expansion of the first layer 610, the second layer 620, the fourth layer 640, and the fifth layer 650. It may be determined whether ends generated by expanding the layers are to be expanded. For example, whether a pixel 614 on a right side of the pixel 612 is to be expanded may be determined. In this example, since a layer is absent under the pixel 614, the pixel 614 may be expanded. Similarly, all other pixels 626, 646, and 654 that are subject to a determination of whether pixels are to be expanded may be expanded.

As described above, the first layer 610 may be expanded to the right side, and the fifth layer 650 may be expanded to the left side. The first layer 610 and the fifth layer 650 may be expanded continuously until the first layer 610 and the fifth layer 650 meet. Similarly, the second layer 620 may be expanded to the right side, and the fourth layer 640 may be expanded to the left side. The second layer 620 and the fourth layer 640 may be expanded continuously until the second layer 620 and the fourth layer 640 meet.

Layers having greatest values, for example, the first layer 610 and the fifth layer 650, among the at least one layer, may be expanded to the left side and the right side. The expansion may be continued until a layer encounters another layer having an identical depth value, or the layer reaches an edge of an area. That is, a layer having a greatest depth value may be expanded to all areas in a reference view, in a multi-layer representation.

As described above, the first multi-layer representation 600, the second multi-layer representation 660, and the third multi-layer representation 670 may indicate information about a predetermined horizontal line in the reference view. Accordingly, the aforementioned expansion may be performed in a unit of the predetermined horizontal line. In particular, a layer having a greatest value with respect to the predetermined horizontal line in the reference view, among the at least one layer in the reference view, may have color information of all areas on the predetermined horizontal line through the expansion. Accordingly, an output view may be guaranteed to be generated without a hole at a predetermined output viewpoint, using the reference view generated through the expansion.

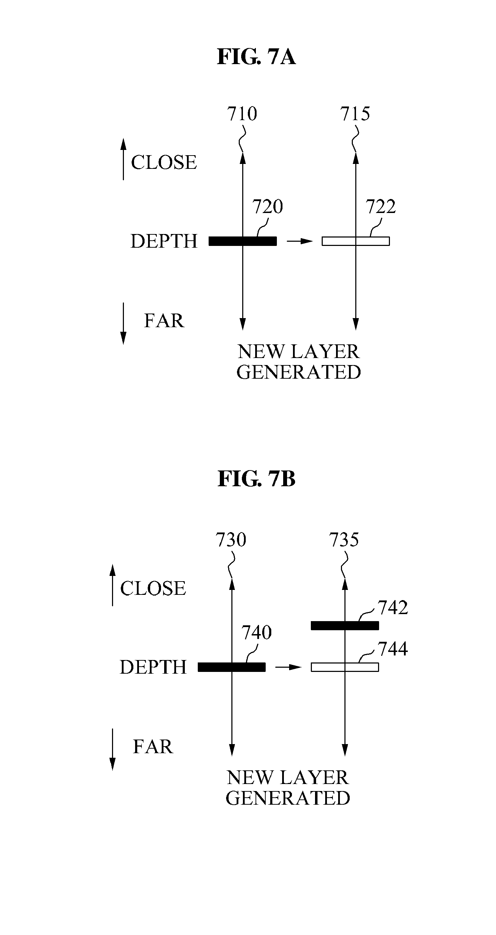

FIGS. 7A through 7D illustrate a principle of layer expansion according to example embodiments. In FIGS. 7A through 7D, a first arrow 710, a second arrow 715, a third arrow 730, a fourth arrow 735, a fifth arrow 750, a sixth arrow 755, a seventh arrow 770, and an eighth arrow 775 may indicate predetermined locations in a reference view. Adjacent arrows, for example, the first arrow 710 and the second arrow 715, may indicate locations adjacent to each other in the reference view.

An upper end of an arrow may indicate that a layer is close to a camera, and a lower end of the arrow may indicate that the layer is far away from the camera. Accordingly, a layer positioned in a lower portion of the arrow may correspond to a layer or a pixel having a greater depth value. A layer positioned in an upper portion of the arrow may correspond to a layer or a pixel having a smaller depth value.

Referring to FIG. 7A, a first layer 720 may be positioned at the first arrow 710. No layer may be positioned at the second arrow 715 that is adjacent to the first arrow 710. Accordingly, a first expanded layer 722 may be generated at the second arrow 715, by expanding the first layer 720.

Referring to FIG. 7B, a second layer 740 may be positioned at the third arrow 730. A third layer 742 may be positioned at the fourth arrow 735 that is adjacent to the third arrow 742. However, the third layer 742 may be closer to the camera than the second layer 740 is. Accordingly, a second expanded layer 744 may be generated at the fourth arrow 735. The second expanded layer 744 may be generated behind the third layer 742.

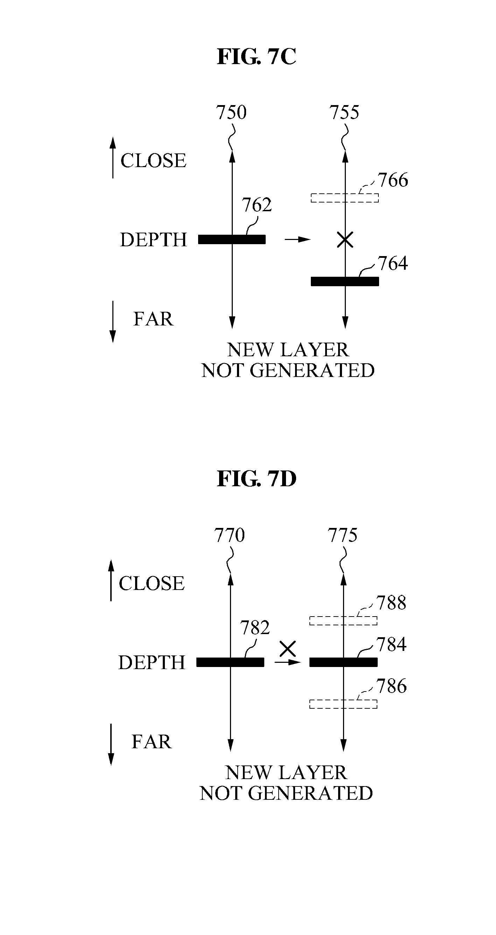

Referring to FIG. 7C, a fourth layer 762 may be positioned at the fifth arrow 750. A fifth layer 764 may be positioned at the sixth arrow 755 that is adjacent to the fifth arrow 750. The fourth layer 762 may be farther from the camera than the fifth layer 764 is. When the fourth layer 764 is expanded, the fifth layer 764 may be occluded by the fourth layer 762. Accordingly, the fourth layer 764 may not be expanded. In this instance, whether a sixth layer 766, being closer to the camera than the fourth layer 762, is present may not affect whether the fourth layer 764 is to be expanded.

Referring to FIG. 7D, a seventh layer 782 may be positioned at the seventh arrow 770. An eighth layer 784 may be positioned at the eighth arrow 775 that is adjacent to the seventh arrow 770. The seventh layer 782 and the eighth layer 784 may have identical depth values. Accordingly, the seventh layer 782 may not be expanded. In this instance, whether a ninth layer 786, being farther from the camera than the seventh layer 782 is, is present may not affect whether the seventh layer 782 is to be expanded. Also, whether a tenth layer 788, being closer to the camera than the seventh layer 782 is, is present may not affect whether the seventh layer 782 is to be expanded.

Thus, according to the principle of layer propagation described with reference to FIGS. 7A through 7D, a layer may not be expanded when a layer having a depth value greater than or equal to a depth value of the layer is present at a location to which the layer may be expanded. Otherwise, the layer may be expanded.

FIG. 8 illustrates layer information of a multi-layer representation according to example embodiments. In FIG. 8, a horizontal axis may indicate a spatial dimension, and a vertical axis may indicate multi-layers having different depth values. Vertical lines 810, 820, and 830 may indicate pixel locations in a reference view. In a multi-layer representation, at least one piece of layer information may be included in any pixel location in the reference view. For example, three pieces of layer information, that is, first layer information 812, second layer information 814, and third layer information 816 may be present at a first pixel location. That is, three layers having different depth values may be present at a location of a first pixel. A single piece of layer information 822 may be present at a second pixel location. Two pieces of layer information 832 and 834 may be present at a third pixel location. The layer information may include a color, for example, red, green, and blue (RGB), and a depth (d) or a disparity associated with the color. Also, the layer information may optionally include an α-value used for alpha blending.

The multi-layer representation may include all information for scenes appearing in input images. Also, the multi-layer representation may include pieces of information that are occluded in the input images, which may be used for generating a new viewpoint. At every spatial location, there may exist multiple color information at different depth levels. Accordingly, the multi-layer representation may not be limited by visibility of pixel locations.

Redundancy in a multi-layer representation may be eliminated. The redundancy may originate from similar information existing in a plurality of input views. For example, when a depth value d of the first layer information 812 is identical to a depth value d of the second layer information 814, two duplicate pieces of layer information may be present in relation to a single pixel. The duplicated layer information or duplicated layers may be consolidated into a single piece of layer information or a single layer. For example, one of color values indicated by the two pieces of layer information or optionally one of α-values, or an average of the color values may be used as consolidated layer information. When the consolidation is performed, an identical color value may be referred to when generating future output views.

FIG. 9 illustrates consolidation of interacting layers according to example embodiments. As one method of eliminating redundancy between layers, a concept of layer interaction may be introduced. When two layers at an identical location represent identical information, the two layers may be understood as interacting with each other. In generating a reference view, a multi-layer representation in which no two layers may interact with each other may be constructed so as to minimize redundancy and thereby enhance efficiency.

As an example, layer interaction may be determined based on a depth value or a disparity value. For example, when a difference between depth values of layers is less than or equal to a predetermined threshold value, the layers may be regarded as interacting layers. When two layers at an identical location differ in depth by less than the predetermined threshold value, the two layers may be regarded as interacting with each other.

Referring to FIG. 9, three layers 922, 924, and 926 at a first location 910 may interact with one another. Also, two layers 942 and 944 at the first location 910 may interact with each other. A layer 932 does not interact with other layers. When two layers interact with each other, the two layers may be consolidated to eliminate the interaction between the two layers. After the consolidation, a consolidated layer 952 may be generated at the first location 910 by consolidating the layers 922, 924, and 926. Also, after the consolidation, a consolidated layer 964 may be generated at the first location 910, by consolidating the layers 942 and 944. A layer 962 may correspond to the layer 932.

One possible method for the consolidation may be to keep one selected layer, and remove other unselected layers. For example, layer 942 may be removed, and the consolidated layer 964 may be generated based on layer information of layer 944. A criterion for selecting a layer may be based on various attributes of interacting layers. The attributes may include a depth, a color, spatially neighboring layers, and the like. As an example, in a scheme using a depth as the criterion for selecting a layer, a layer having a lowest depth value, that is, a layer closest to the camera, may be selected. Conversely, a layer having a greatest depth value may be selected. As another example, in another possible scheme, a new layer may be derived from two interacting layers. That is, new color values and depth values may be derived from both layers. A new layer may be generated through consolidation, for example, based on an average of color values and depth values of the interacting layers.

As an example of at least three layers, in this instance, the layers 922, 924, and 926, may interact with one another. When at least three layers interact with one another, a predetermined methodology, similar to a scenario associated with the two aforementioned interacting layers, which may resolve pair-wise interactions between interacting layers, may be used. For example, it may be assumed that a layer A having a smallest depth value may interact with a layer B having a depth value greater than the depth value of the layer A, the layer B may interact with a layer C having a greatest depth value, and the layer A may not interact with the layer C. In this instance, one solution may be to keep one layer, for example, the layer B, and remove the other layers. Another solution may be to remove the layer B, and keep the layer A and the layer C.

Once rules for resolving interaction between layers are defined, it may be easy to obtain a multi-layer representation from multiple input images and depth maps corresponding to the multiple input images. Pixel locations warped from the input images to a reference viewpoint according to the associated depth map may become new layers. When at least two new layers generated by warping interact with each other, interaction between the layers may be resolved according to the defined rules.

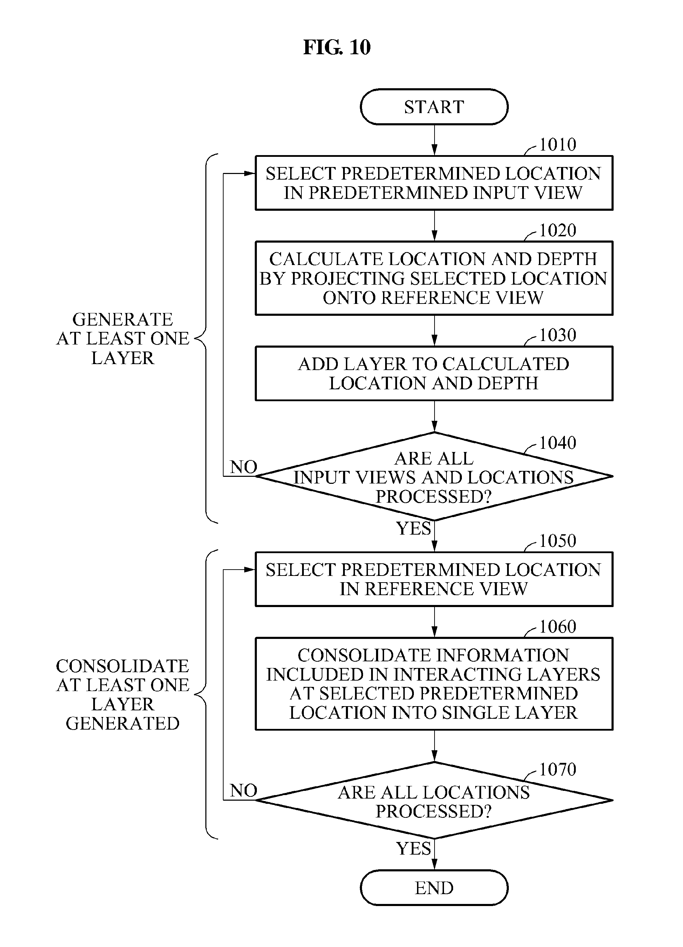

FIG. 10 illustrates a method of generating a multi-layer representation according to example embodiments. Operations 1010 through 1070 may correspond to or be included within operation 110 of FIG. 1 of generating the aforementioned multi-layer representation.

In operations 1010 through 1040, at least one layer may be generated by projecting an image of each of at least one input view onto a reference view. In operation 1010, a predetermined input view may be selected from the at least one input view, and a predetermined location in the selected input view may be selected. The predetermined location may refer to pixel coordinates. The selected predetermined input view will be referred to as a first input view, and the selected predetermined location will be referred to as a first location. In operation 1020, a second location and a second depth in the reference view may be calculated by projecting the selected first location onto the reference view, using a first depth value corresponding to the first location. In operation 1030, a new layer may be added to the second location and the second depth calculated through the projection. In this instance, a color value of the added new layer may be identical to a color value of the first location. In operation 1040, whether all input views and all locations are processed may be determined. When all input views and all locations are processed, operations 1050 through 1070 of consolidating the generated layers may be performed. Otherwise, operations 1010 through 1040 may be iteratively performed with respect to input views and locations that are not yet processed.

In operations 1050 through 1070, the at least one generated layer may be consolidated. In operation 1050, a predetermined location in the reference view may be selected. In operation 1060, information included in interacting layers at the selected predetermined location may be consolidated into a single layer. In operation 1070, whether all locations are processed may be determined. When all locations are processed, the process may be terminated. Otherwise, operations 1050 through 1070 may be iteratively performed with respect to locations that are not yet processed.

Technical features described with reference to FIGS. 1 through 9 will be applied identically and thus, detailed descriptions will be omitted for conciseness.

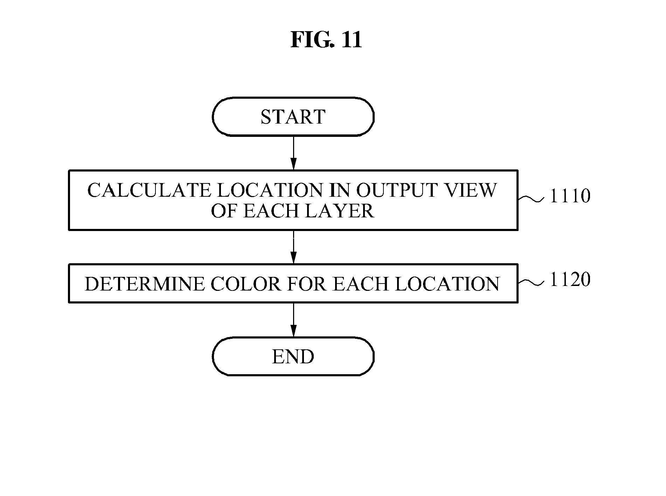

FIG. 11 illustrates a method of generating an output view according to example embodiments. Operations 1110 and 1120 may correspond to or be included within operation 130 of FIG. 1 of generating an output view. In operation 1110, a location in an output view of each of at least one layer may be calculated by projecting each of the at least one layer in a reference view onto the output view. In operation 1120, a color of a layer having a smallest depth value, among the at least one layer corresponding to the calculated location, may be determined to be a color of the calculated location, for each location in the output view.

To use a color of a most adjacent layer for each location in an output view may be regarded as handling occlusion between layers. In order to achieve proper occlusion handling, a depth buffer, for example, a z-buffer, may be used. A color value and a depth value corresponding to each location in the output view may be stored in the depth buffer. Every time a color value is written using at least one layer projected onto a predetermined location, a depth value of a layer may be compared to a depth value already existing in the depth buffer. For example, when the depth value of the layer is greater than a depth value already stored in the depth buffer, that is, a distance from a camera is greater than a value already stored in the depth buffer, a color value of the layer may be discarded. When the depth value of the layer is less than the depth value already stored in the depth buffer, that is, the distance from the camera is less than the value already stored in the depth buffer, the color value of the layer may be stored as a pixel value in the depth buffer, and a depth value in the depth buffer may be updated. In other words, when multiple colors are assigned to an identical pixel in an output view through at least one layer, a color from a layer having a closest depth or a greatest disparity may take precedence. Optionally, α-values may be used for proper boundary rendering. A color value of a foremost layer may be blended with a color value of a subsequent foremost layer according to an α-value.

Technical features described with reference to FIGS. 1 through 10 will be applied identically and thus, detailed descriptions will be omitted for conciseness.

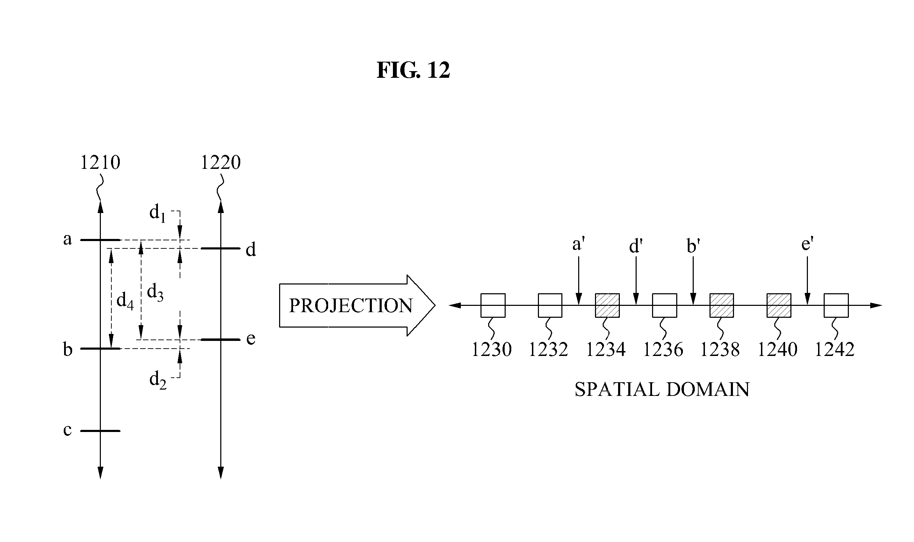

FIG. 12 illustrates a method of projecting layers having similar depth values onto an output view according to example embodiments. In FIG. 12, a first arrow 1210 and a second arrow 1220 may indicate adjacent locations, for example, adjacent pixels, in a multi-layer representation, that is, a reference view. In other words, neighboring locations in two spaces are shown along with associated layers, in FIG. 12.

Among layers at the adjacent locations, predetermined layers may have similar depth values. For example, when a difference between depth values of layers is less than or equal to a predetermined threshold value, the layers may be regarded as having similar depth values.

For example, since a difference between depth values of a layer a and a layer d corresponds to d₁, the layer a and the layer d may be determined as having similar depth values. Since a difference between depth values of a layer b and a layer e corresponds to d₂, the layer b and the layer e may be determined as having similar depth values. However, since a difference between depth values of the layer a and the layer e corresponds to d₃, the layer a and the layer e may be determined as having different depth values. Since a difference between depth values of the layer d and the layer b corresponds to d₄, the layer d and the layer b may be determined as having different depth values. Here, a layer having a depth value similar to a depth value of a layer c may be absent.

A horizontal line on a right side may indicate a spatial domain of an output view. Pixel locations 1230, 1232, 1234, 1236, 1238, 1240, and 1242 in the output view are illustrated. For each horizontally-adjacent spatial location pair in a multi-layer representation, for example, a location of the first arrow 1210 and a location of the second arrow 1220, layer pairs having similar depth values may be processed for rendering. The layers a, d, b, and e may be projected onto a coordinate system of a new rendered output view or an output image, according to a depth of each of the layers a, d, b, and e. The layer a may be projected onto a'. The layer b may be projected onto b'. The layer d may be projected onto d'. The layer e may be projected onto e'.

Color values and depth values at all pixel locations between a' and d' may be interpolated, using a form of interpolation, for example, using a bilinear interpolation. As an example, when an x-coordinate of the pixel location 1234 corresponds to 3, an x-coordinate of a' corresponds to 2.5, and an x-coordinate of d' corresponds to 3.5, a color value of a pixel at the pixel location 1234 may correspond to an intermediate value of a color value of the layer a at the first arrow 1210 and a color value of the layer d at the second arrow 1220. As another example, when the x-coordinate of the pixel location 1234 corresponds to 3, the x-coordinate of a' corresponds to 2.9, and the x-coordinate of d' corresponds to 3.2, a color value of a pixel at the pixel location 1234 may correspond to a value at a point dividing the color value of the layer a at the first arrow 1210 and the color value of the layer d at the second arrow 1220 by 1:2. Similarly, a depth value of the pixel location 1234 may be interpolated using a form of interpolation. Also, color values and depth values of the pixel locations 1238 and 1240 may be interpolated using a bilinear interpolation of color values and depth values of b' and e'.

When a first pixel in a reference view is projected onto a first location in an output view and a second pixel in the reference view is projected onto a second location in the output view, a color of a pixel present between the first location and the second location in the output view may be determined based on a bilinear interpolation between a color of the first pixel and a color of the second pixel. Similarly, a depth value of the pixel present between the first location and the second location in the output view may be determined based on a bilinear interpolation of a depth value of the projected first pixel and a depth value of the projected second pixel.

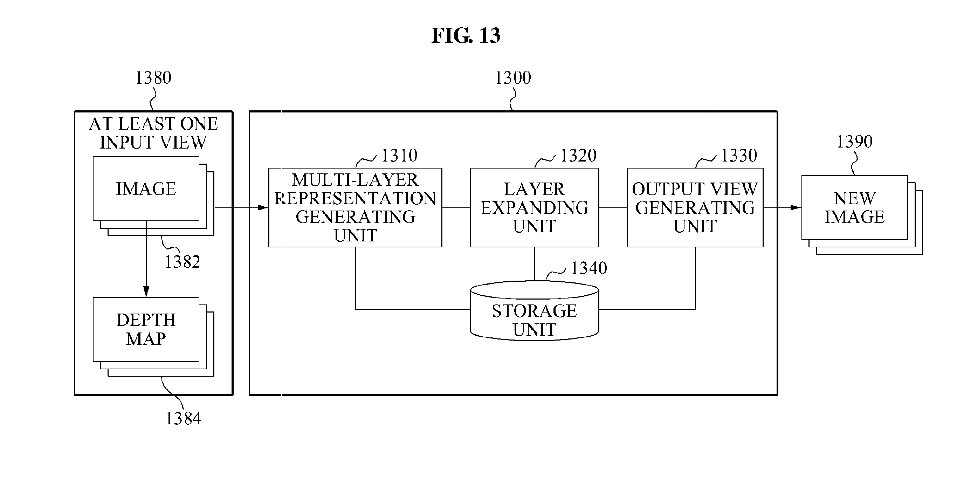

FIG. 13 illustrates an image processing apparatus 1300 according to example embodiments. The image processing apparatus 1300 may include a multi-layer representation generating unit 1310, a layer expanding unit 1320, and an output view generating unit 1330. The image processing apparatus 1300 may further include a storage unit 1340. At least one input view 1380 may be input to the image processing apparatus 1300. Each of the at least one input view 1380 may include an image 1382 and a depth map 1384 associated with the image 1382. Each of the at least one input view 1380 may correspond to a view viewed at a predetermined viewpoint of a scene. The image processing apparatus 1300 may output a new image 1390 viewed at, at least one output viewpoint. The output image 1390 may belong to one of an interpolation region and an extrapolation region.

The multi-layer representation generating unit 1310 may generate a multi-layer representation for a reference view including all information about a scene, using the at least one input view 1380. The multi-layer representation may include at least one layer generated based on the image 1382 and the depth map 1384 of each of the at least one input view 1380. The output view generating unit 1330 may generate an output view viewed at an output viewpoint, using the generated multi-layer representation. The layer expanding unit 1320 may expand the at least one layer of the multi-layer representation. As described with reference to FIG. 6, each of the at least one layer may be expanded within a range in which a layer having a depth value greater than a depth value of each of the at least one layer is unoccluded. Also, whether the at least one layer is to be expanded may be determined iteratively, on a pixel by pixel basis, starting from a pixel positioned at an end of a layer.

By the expansion, a layer having a greatest depth value with respect to a predetermined horizontal line in the reference view, among the at least one layer, may have color information of all areas on the predetermined horizontal line. The storage unit 1340 may store and provide data associated with the at least one input view 1380, the multi-layer representation, the reference view, and the output view.

The multi-layer representation generating unit 1310 may generate the at least one layer by projecting an image of each of the at least one input view 1380 onto the reference view, and may consolidate interacting layers, among the generated at least one layer. The multi-layer representation generating unit 1310 may generate the at least one layer, by (1) selecting a first location in a first input view, among the at least one input view 1380, (2) calculating a second location and depth in a reference view by projecting the selected first location onto the reference view, and (3) adding a new layer to the calculated second location and the calculated depth. In this instance, a color value of the added new layer may be identical to a color value of the first location.

The multi-layer representation generating unit 1310 may consolidate the interacting layers, by (1) selecting a first location in the reference view, and (2) consolidating information about the first location included in the interacting layers at the first location into a single layer. A difference between depth values of the interacting layers may be less than or equal to a predetermined threshold value.

The output view generating unit 1330 may generate an output view by (1) calculating a location in the output view of each of the at least one layer, by projecting each of the at least one layer onto the output view, and (2) determining a color of a layer having a smallest depth value, among the at least one layer, to be a color of the calculated location for each location in the output view.

When a first pixel and a second pixel that are adjacent to each other in the multi-layer representation are included in a first layer and a second layer, respectively, the first pixel is projected onto a first location of the output view, and the second pixel is projected onto a second location of the output view, a color of a pixel positioned between the first location and the second location may be determined based on a bilinear interpolation between a color of the first pixel and a color of the second pixel.

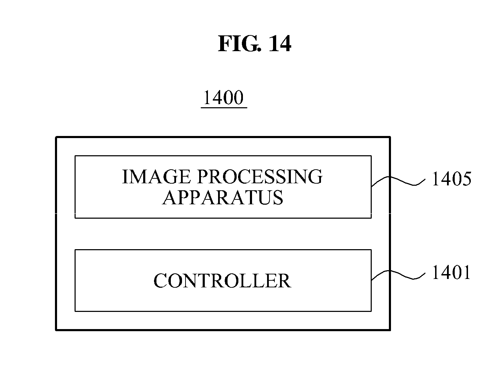

FIG. 14 illustrates a multi-view display device. Referring to FIG. 14, the multi-view display device 1400 may include, for example, a controller 1401 and an image processing apparatus 1405.

The multi-view display device 1400 may be in the form of a 3D display for displaying a 3D image and may employ a multi-view scheme to output a plurality of different viewpoints. Examples of a 3D display may include a tablet computing device, a portable gaming device, a 3D television display or a portable 3D monitor such as in a laptop computer.

The controller 1401 may generate one or more control signals to control the multi-view display device 1400 and to be displayed by the multi-view display device 1400. The controller 1401 may include one or more processors.

The image processing apparatus 1405 may be used to generate a multi-view image for the multi-view display device 1400 and may correspond, for example, to the image processing apparatus 1300 as illustrated in FIG. 13. Thus, image processing apparatus 1405 may include, for example, a multi-layer representation generating unit 1310, a layer expanding unit 1320, an output view generating unit 1330, and a storage unit 1340. Although not shown in FIG. 14, each of the units in image processing apparatus 1405 may correspond to similarly named units discussed herein, for example with respect to FIG. 13, and therefore need not be discussed further here.

The image processing apparatus 1405 may be installed internally within the multi-view display device 1400, may be attached to the multi-view display device 1400, or may be separately embodied from the multi-view display device 1400. Regardless of its physical configuration, the image processing apparatus 1405 has all of the capabilities discussed herein. The image processing apparatus 1405 may include one or more internal processors or may be controlled by the one or more processors included within the multi-view display device 1400 such as the one or more processors of controller 1401.

Technical features described with reference to FIGS. 1 through 15 will be applied identically and thus, detailed descriptions will be omitted for conciseness.

The technical features according to the above-described embodiments may be recorded in non-transitory computer-readable media including program instructions to implement various operations embodied by a computer. The media may also include, alone or in combination with the program instructions, data files, data structures, and the like. Examples of non-transitory computer-readable media include magnetic media such as hard disks, floppy disks, and magnetic tape; optical media such as CD ROM disks and DVDs; magneto-optical media such as optical disks; and hardware devices that are specially configured to store and perform program instructions, such as read-only memory (ROM), random access memory (RAM), flash memory, and the like. Examples of program instructions include both machine code, such as produced by a compiler, and files containing higher level code that may be executed by the computer using an interpreter. The described hardware devices may be configured to act as one or more software modules in order to perform the operations of the above-described embodiments, or vice versa.

Any one or more of the software modules described herein may be executed by a controller such as a dedicated processor unique to that unit or by a processor common to one or more of the modules. The described methods may be executed on a general purpose computer or processor or may be executed on a particular machine such as the apparatus for processing an image described herein.

Although embodiments have been shown and described, it would be appreciated by those skilled in the art that changes may be made in these embodiments without departing from the principles of the disclosure, the scope of which is defined by the claims.

## Claims

1. A method of processing an image, the method comprising:
generating a multi-layer representation for a reference view including information about a scene, using at least one input view; and
generating an output view viewed at an output viewpoint, using the generated multi-layer representation,
wherein
each of the at least one input view corresponds to a view viewed at a predetermined viewpoint of the scene,
each of the at least one input view comprises an image, and a depth map associated with the image, and
the multi-layer representation comprises at least one layer generated based on the image and the depth map of each of the at least one input view.

2. The method of claim 1, further comprising:
expanding the at least one layer of the multi-layer representation,
wherein each of the at least one layer is expanded within a range in which a layer, among the at least one layer, having a depth value greater than a depth value of each of the at least one layer is unoccluded.

3. The method of claim 2, wherein whether the at least one layer is to be expanded is determined iteratively, on a pixel by pixel basis, starting from a pixel positioned at an end of the at least one layer.

4. The method of claim 2 or 3, wherein a layer, among the at least one layer, having a greatest depth value with respect to a predetermined horizontal line of the reference view, has color information of all areas on the predetermined horizontal line.

5. The method of any of the preceding claims, wherein the generating of the multi-layer representation comprises:
generating the at least one layer by projecting an image of each of the at least one input view onto the reference view; and
consolidating interacting layers, among the generated at least one layer.

6. The method of claim 5, wherein the generating of the at least one layer comprises:
selecting a first location for a first input view, among the at least one input view;
calculating a second location and a depth in the reference view, by projecting the selected first location onto the reference view; and
adding a new layer to the second location and the depth.

7. The method of claim 6, wherein a color value of the added layer is identical to a color value of the first location.

8. The method of claim 5, 6 or 7, wherein a difference between depth values of the interacting layers is less than or equal to a predetermined threshold value.

9. The method of any of the preceding claims 5 - 8, wherein the consolidating of the interacting layers comprises:
selecting a first location in the reference view; and
consolidating, into a single layer, information about the first location included in the interacting layers at the first location.

10. The method of any of the preceding claims, wherein the generating of the output view comprises:
calculating a location in the output view of each of the at least one layer, by projecting each of the at least one layer onto the output view; and
determining a color of a layer having a smallest depth value, among the at least one layer, to be a color of the calculated location for each location in the output view.

11. The method of any of the preceding claims, wherein, when a first pixel and a second pixel that are adjacent to each other in the multi-layer representation are included in a first layer and a second layer, respectively, the first pixel is projected onto a first location of the output view, and the second pixel is projected onto a second location of the output view, and a color of a pixel positioned between the first location and the second location is determined based on an interpolation between a color of the first pixel and a color of the second pixel.

12. The method of any of the preceding claims, wherein:
generating the multi-layer representation is for a single reference view comprising scene information present in a plurality of input images, wherein the scene information comprises pixel information associated with a plurality of pixel locations and layer information corresponding to the pixel information, the layer information comprising depth information corresponding to the pixel information; and further comprising:
eliminating interaction between layers at a same pixel location based on a predetermined rule;
creating layer information in an occluded region by propagating neighboring layer information to an adjacent location if the propagated neighbor layer information does not occlude any existing layer information at the adjacent location; and
generating an output view image by rendering data from the multi-layer representation.

13. The method of any of the preceding claims, further comprising:
generating the multi-layer representation by projecting each of a plurality of input images onto a single reference view comprising scene information present in the plurality of input images, wherein the scene information comprises pixel information associated with a plurality of pixel locations and layer information corresponding to the pixel information, the layer information comprising depth information corresponding to the pixel information; and
eliminating interaction between layers of the multi-layer representation at a same pixel location based on a predetermined rule.

14. A non-transitory computer-readable medium comprising a program for instructing a computer to perform the method of any of the preceding claims.

15. An apparatus processing an image, the apparatus comprising:
a multi-layer representation generating unit to generate a multi-layer representation for a reference view including information about a scene, using at least one input view; and
an output view generating unit to generate an output view viewed at an output viewpoint, using the generated multi-layer representation,
wherein
each of the at least one input view corresponds to a view viewed at a predetermined viewpoint of the scene,
each of the at least one input view comprises an image, and a depth map associated with the image, and
the multi-layer representation comprises at least one layer generated based on the image and the depth map of each of the at least one input view.
